# EUROPÄISCHE PATENTSCHRIFT

(11) **EP 2 853 148 B1**
(45) Veröffentlichungstag und Bekanntmachung des Hinweises auf die Patenterteilung: **15.11.2017**
(21) Anmeldenummer: 14000109.0
(22) Anmeldetag: 13.01.2014
(51) Int. Cl.: A01G 3/033

(54) **Elektrische Baumschneidevorrichtung**
Electrical tree cutting device
Dispositif électrique de coupe d'arbre

(30) Priorität: 26.09.2013 CN 201310447304; 26.09.2013 CN 201310451958
(43) Veröffentlichungstag der Anmeldung: 01.04.2015
(73) Patentinhaber: Ningbo Zhenhai Greatwall Automobile Parts Factory, Ningbo, Zhejiang (CN)
(72) Erfinder: Qiang, Fang Pei, Ningbo, Zhejiang (CN)
(74) Vertreter: Patentanwälte Dr. Keller, Schwertfeger

(56) Entgegenhaltungen:
- EP-A1- 1 574 125
- EP-A1- 2 163 853
- WO-A2-2011/117335
- CN-Y- 2 865 254

## Beschreibung

Die vorliegende Erfindung betrifft eine Baumschneidevorrichtung für das Beschneiden von Zweigen oder Blättern von Pflanzen, insbesondere Bäumen.

Eine herkömmliche Baumschere umfasst einen Griff und zwei Schneidklingen, die schwenkbar zueinander an dem Griff angebracht sind. Um auch höher gelegenes Blattwerk oder Zweige zu erreichen, sind häufig Verlängerungsstangen vorgesehen. Zur Bedienung der Schneidklingen gibt es beispielsweise Ziehleinen, die es dem Betreiber ermöglichen, die Schneidklingen zu bewegen.

Eine solche Vorrichtung ist in der DE 2006 019 208 U1 beschrieben. Die Baumschneidevorrichtung umfasst einen Griff, eine stationäre Schneidklinge, ein Antriebsgestänge, eine Ziehleine, eine bewegbare Schneidklinge, ein Federelement und ein Positionierungselement. An dem Griff ist ein Flaschenzug bzw. eine Rolle befestigt. Die stationäre Schneidklinge ist an dem Griff befestigt und weist einen Übertragungszahnbereich auf. Ein weiterer Flaschenzug bzw. eine Rolle ist an dem Antriebsgestänge befestigt. Das Positionierungselement ist auf der stationären Schneidklinge schwenkbar befestigt und kann zwischen mehreren Positionen bewegt werden.

Das Schneiden von Zweigen oder Ästen mit großen Durchmessern erfordert einen beträchtlichen Kraftaufwand, so dass Vorrichtungen mit Ziehleinen für diesen Zweck häufig überfordert sind. Um für eine zusätzliche Hebelwirkung zu sorgen, sind Baumscheren häufig mit besonders langen Handgriffen versehen. Eine solche Ausführung bewirkt eine zusätzliche Hebelwirkung und bedingt eine größere Reichweite, um auch entfernt liegende Baumzweige oder dergleichen zu beschneiden. Von einem zusätzlichen Hebel macht beispielsweise auch das US-Patent Nr. 5,020,222 Gebrauch.

Daneben gibt es Baumscheren mit variabler Kraft, wie sie beispielsweise in der EP 0 895 712 B1 beschrieben sind. Die Vorrichtung besteht aus einem Schneidkopf, einem länglichen Gehäuse und einem Antriebsmechanismus, der zwischen dem Kopf und dem Gehäuse angeordnet ist. Der Schneidkopf umfasst eine Schneidklinge, die um einen Schwenkpunkt drehbar ist und mit einer Backe zusammenwirkt, die eine Bucht bildet, die so gestaltet ist, dass sie ein Schneidstück aufnehmen kann. Eine Feder spannt die Schneidklinge in die offene Stellung bezogen auf die Backe vor. Der Antriebsmechanismus ist mit dem Schneidkopf so verbunden, dass sich ein Teil von dem Mechanismus mit der Backe vereinigt. Der Antrieb erfolgt vorzugsweise über eine Kette.

Eine Baumschere mit verstecktem Antriebsmechanismus ist in der DE 2009 007 581 U1 beschrieben. Diese umfasst einen Verlängerungsschaft, eine feststehende Schneidklinge und eine bewegbare Schneidklinge sowie eine Antriebsschnur, die mit der beweglichen Klinge verbunden ist, um die bewegliche Klinge anzutreiben. Ein Gleitelement ist beweglich in dem Verlängerungsschaft angeordnet und mit der Antriebsschnur verbunden, um diese zu bewegen. Eine Bedienschnur, die in dem Verlängerungsschaft angeordnet und mit dem Gleitelement verbunden ist, sorgt für die Bewegung des Gleitelements. Ein weiteres Bedienelement ist beweglich auf dem Verlängerungsschaft angeordnet und sorgt für die Bewegung der Bedienschnur. Die mechanische Bedienung ist jedoch, wie bereits angemerkt, gerade bei sehr starken Ästen äußerst kraftaufwändig und daher in vielen Fällen nicht in befriedigender Weise einsetzbar.

Die DE 199 23 727 C1 beschreibt eine Baumschere, bestehend aus einem Blatt und einem Gegenblatt, wobei das Blatt über einen Kolben eines Druckluftzylinders bewegbar ist. Ein Steuerungsventil sorgt für die Zufuhr von Druckluft in den Druckluftzylinder. Zum Bewegen des beweglichen Blattes ist der Kolben in Zugrichtung des Gestänges beaufschlagt. Zum Öffnen des Blattes und des Gegenblattes sind eine Rückzugfeder sowie eine Entlüftungseinrichtung am Druckluftzylinder vorgesehen, wobei der Druckluftzylinder der Schwenkkinematik des beweglichen Blattes angepasst ist.

Die DE 101 30 452 B4 beschreibt eine Baumschneidevorrichtung, wobei zwischen einem drehbaren Kraftübertragungselement und dem Werkzeug ein Getriebe geschaltet ist, welches zwischen wenigstens zwei Positionen umschaltbar ist, die sich in der Übertragung eines Drehmoments von dem drehbaren Kraftübertragungselement auf das Werkzeug unterscheiden.

Häufig ist die feststehende Schneidklinge bei den bekannten Baumschneidevorrichtungen entweder gar nicht oder über einen mechanischen Schalter einstellbar. Die Verstellung der feststehenden Schneidklinge relativ zu der bewegbaren Schneidklinge sorgt dafür, dass sich der Öffnungswinkel entweder vergrößert oder verkleinert. Auf diese Weise können unterschiedliche Durchmesser von Ästen oder Zweigen geschnitten werden. Mit fortschreitendem Schneidvorgang kann der Öffnungswinkel der beiden Schneidklingen verringert und die Schnittfrequenz kleiner werden, da sich auch das Schneidobjekt verändert. Bei der EP 2 022 320 B1 ist hierfür eine Rückstellfeder vorgesehen, welche zwischen der bewegbaren Klinge und einer Trommel gekuppelt ist und die eine Spannkraft auf die bewegbare Klinge ausübt, so dass der Klingenabschnitt der bewegbaren Klinge von der feststehenden Klinge getrennt wird. Die Bedienung ist jedoch äußerst umständlich. Ferner kommt hinzu, dass die meisten der genannten Schneidvorrichtungen aufgrund ihrer Konstruktion ein relativ hohes Gewicht aufweisen und daher die Nutzung erschweren. Die CN 2 865 254 Y offenbart eine Baumschneidevorrichtung gemäß dem Oberbegriff des Anspruchs 1.

Vor diesem Hintergrund ist es Aufgabe der vorliegenden Erfindung, eine verbesserte Baumschneidevorrichtung bereitzustellen, mit der es möglich ist, den Öffnungswinkel zwischen der bewegbaren Schneidklinge und der feststehenden Schneidklinge bedarfsweise durch den Nutzer anzupassen.

Diese Aufgabe wird gelöst durch eine Baumschneidevorrichtung mit den Merkmalen des Anspruchs 1. Bevorzugte Ausführungsformen finden sich in den Unteransprüchen wieder. Die erfindungsgemäße Baumschneidevorrichtung besteht aus einem Schneidkopf mit einer bewegbaren Schneidklinge, einer feststehenden Schneidklinge und einer Antriebseinheit für die Schneidklingen. Über die Antriebseinheit wird die Schnittfrequenz eingestellt und der Öffnungswinkel zwischen der bewegbaren Schneidklinge und der feststehenden Schneidklinge beim Schneiden eines Astes oder eines Zweiges vergrößert oder verringert. Die beiden Schneidklingen sind über ein Montageteil miteinander verbunden. Üblicherweise umfasst das Montageteil einen Stift, der die beiden Klingen über Befestigungsöffnungen zusammenhält. Zur Verstellung des Öffnungswinkels der feststehenden Schneidklinge ist ein Zahnkranz vorgesehen, der von einer Arretierscheibe gehalten wird. Die Arretierscheibe verhindert eine Gegenrotation der feststehenden Schneidklinge und fixiert diese am Schneidkopf. Die Baumschneidevorrichtung besteht ferner aus einem Bedienteil mit einem Handgriff und einem Taster zur Steuerung der Antriebseinheit. Mit dem Taster wird die Antriebseinheit ein- oder ausgeschaltet und der Öffnungswinkel eingestellt.

Die feststehende Schneidklinge ist durch die Antriebseinheit in wenigstens eine Arbeitsposition verstellbar, bei der sich der Öffnungswinkel der feststehenden Schneidklinge relativ zur bewegbaren Schneidklinge entweder vergrößert oder verkleinert. Daneben kann bei einer Arbeitsposition auch der Ein-/Aus-Zustand vorgesehen sein. Erfindungsgemäß wird die wenigstens eine Arbeitsposition von einer Hall-Platte zur Detektion von Magnetfeldkomponenten vorgegeben. Die Magnetfeldkomponenten werden von einem Magneten erzeugt, der sich auf einem bewegbaren Magnetträger befindet. Der Magnetträger ist relativ zu der Hall-Platte verschiebbar. Die von dem Magneten erzeugten Magnetfeldkomponenten sind von einem Hall-Sensor an der Arbeitsposition erfassbar. Das von dem Hall-Sensor erzeugte Signal wird an eine Steuerungseinheit zur Steuerung der Antriebseinheit der feststehenden Schneidklinge übermittelt. Die Vorrichtung umfasst daher auch ein Signalverarbeitungsmodul und ggf. einen Operationsverstärker. Dabei können unterschiedliche Hall-Sensoren zur Anwendung kommen, beispielsweise Schalter, die ein Hall-Element enthalten, differenzielle Schalter oder lineare Sensoren. Sobald der Hall-Sensor von einem Strom durchflossen und in ein senkrecht dazu verlaufendes Magnetfeld gebracht wird, liefert er eine Ausgangsspannung, die proportional zum Produkt aus magnetischer Feldstärke und dem Strom ist (Hall-Effekt). Verwendbar sind sowohl digitale als auch analoge Hall-Sensoren.

Erfindungsgemäß umfasst die Hall-Platte mehrere Arbeitspositionen, zu denen der Magnet über den Magnetträger vermittelt und durch den Taster bewegt werden kann. Das Zurückziehen des Magnetträgers in die Ausgangsposition erfolgt vorzugsweise mittels einer Rückziehfeder. Vorzugsweise ist daher der Magnetträger mit dem daran angeordneten Magneten entlang der Hall-Platte zu den jeweiligen Arbeitspositionen bewegbar.

Bei dem Antriebssystem handelt es sich vorzugsweise um eine elektrische Antriebseinheit, die von der Steuerungseinheit kontrollierbar ist. Die Antriebseinheit besteht aus einem Antriebskopf und einem Adapter, der wenigstens eine Verbindung zu der feststehenden Schneidklinge herstellt, um so deren Öffnungswinkel entsprechend den Steuerungsausgaben der Steuerungseinheit einzustellen.

Zwischen dem Bedienteil und dem Schneidkopf ist vorzugsweise ein längenveränderbares Verlängerungselement angeordnet. Vorzugsweise ist das Verlängerungselement teleskopartig über einen Längenbereich von 0,6 bis 2,1 m oder länger ausfahrbar. Die Leitungen der Steuerungseinheit und/oder der Antriebseinheit verlaufen innerhalb des Verlängerungselementes. Normalerweise kann das Bedienteil direkt mit dem Schneidkopf, in dem sich auch die Antriebseinheit befindet, verbunden werden. Bei der Verwendung eines Verlängerungselementes ist jedoch erfindungsgemäß vorgesehen, dass die Enden des Verlängerungselementes mit einer elektrischen Steckverbindung ausgerüstet sind, beispielsweise einer Buchse oder einem Stecker, um eine elektrische Verbindung des Schneidkopfes und des Bedienteils herzustellen. Dies ermöglicht für den Nutzer einen schnellen Auf- oder Abbau des Gerätes beim Einsatzort. Dieser muss lediglich das eine Ende des Verlängerungselementes mit dem Bedienteil und das andere Ende mit dem Schneidkopf verbinden. Über den an dem Bedienteil ausgebildeten Taster kann er die bewegbare Schneidklinge aktivieren oder deaktivieren und den Öffnungswinkel der feststehenden Schneidklinge relativ zu der bewegbaren Schneidklinge fachgerecht einstellen.

Zur Sicherstellung dieser Funktion sind verschiedene Fixiereinrichtungen für die Schneidklingen und deren Bestandteile vorgesehen. So sind die Befestigungs- bzw. Montageöffnungen der Schneidklingen unterschiedlich ausgestaltet, so dass diese unabhängig voneinander bewegt werden können. Das Montageteil umfasst einen Stift, dessen Ende zylinderförmig ausgebildet ist und der zur Aufnahme der Befestigungsöffnung des Zahnrades dient. Das Zentrum des Stiftes ist mehreckig ausgestaltet, ebenso wie die Arretieröffnung der feststehenden Schneidklinge. Durch dieses geometrische Profil kann eine Kraftübertragung entsprechend den Steuerungsvorgaben des Hall-Sensors erfolgen. Die bewegbare Schneidklinge besitzt vorzugsweise eine runde Montageöffnung entsprechend der Ausgestaltung des Stiftes am Montageteil.

In einer Ausführungsform hat die Arretierscheibe zur Fixierung der feststehenden Schneidklinge einen rundförmigen Aufnahmebereich für den Zahnkranz sowie zwei an den Außenseiten ausgebildete Haken. Der rundförmige Aufnahmebereich und die beiden Haken sind vorzugsweise U-förmig ausgestaltet und bewirken eine Kopplungsfunktion mit dem Zahnkranz.

Über den Taster können die einzelnen Arbeitspositionen eingestellt werden, was beispielsweise von der Länge des Tastdruckes oder der Anzahl der Tastdrucke abhängt. Dabei kooperiert ein Ende des Tasters mit dem Magnetträger, wobei die Position des Magnetträgers entsprechend der Betätigung des Tasters veränderbar ist. Dadurch ist sowohl die bewegbare Schneidklinge als auch die wenigstens eine Arbeitsposition der feststehenden Schneidklinge über den Taster steuerbar.

Der Öffnungswinkel zwischen der bewegbaren Schneidklinge und der feststehenden Schneidklinge beträgt vorzugsweise zwischen 20 und 30 mm. Zur Vermeidung mechanischer Verluste und zur Erhöhung der Leistungsfähigkeit ist in einer bevorzugten Ausführungsform ferner eine mechanische Übertragung vorgesehen, die durch eine Kugelgewindestange vermittelt ist. Die Antriebseinrichtung umfasst ferner vorzugsweise eine Bremse und einen Kommutator.

Zur Vereinfachung der Handhabung und zur Reduzierung des Gewichtes der Schneidevorrichtung ist in einer bevorzugten Ausführungsform ferner vorgesehen, dass die Steuerungseinheit für die Antriebseinheit in einer Energieversorgungseinheit vereint ist. Vorzugsweise handelt es sich bei der Energieversorgungseinheit um eine Batterie. Die Batterie stellt den entsprechenden Strom für die Funktion der Antriebseinheit zur Verfügung. Vorzugsweise ist eine Schutzeinrichtung vorgesehen, welche die Antriebseinheit bei Überlastung der bewegbaren Schneidklinge ausschaltet. Die Steuerungseinheit selbst umfasst ein Signalverarbeitungsmodul und ein Antriebssteuerungsmodul, um die vom Hall-Sensor erfassten Signale an die Antriebseinheit zu übermitteln, welche ihrerseits die entsprechenden Schneidklingen steuern.

Die erfindungsgemäße Baumschneidevorrichtung hat den Vorteil, dass ihr Gewicht gegenüber herkömmlichen Baumschneidevorrichtungen reduziert werden kann, da die Steuerungseinrichtungen zum Teil digital arbeiten und daher nur einen geringen Platz- und Gewichtsbedarf erfordern.

Über den erfindungsgemäßen Taster kann bequem der Öffnungswinkel der beiden Schneidklingen eingestellt und somit auch die Schnittgeschwindigkeit gewählt werden. Dies erhöht nicht zuletzt auch die Sicherheit des Nutzers. Das Gehäuse des Schneidkopfes bzw. des Bedienteils besteht vorzugsweise aus einer Magnesium-Legierung, was das Gewicht zusätzlich reduziert. Gerade bei einer langen Nutzung des Gerätes machen sich kleine Gewichtsunterschiede bemerkbar. Hinzu kommt, dass durch die teleskopartige Verlängerung des Verlängerungselementes auch ein bequemer Schnitt entfernter Schneidobjekte möglich ist. Auch die Auslagerung der Steuerungseinheit in die Energieversorgungseinheit sorgt für eine Gewichtsreduzierung und zusätzliche Stabilität. Die zusätzliche Sicherheitseinrichtung wird ausgelöst, wenn ein bestimmter Schwellenwert bei der Kraftaufnahme überschritten wird, wodurch der Stromkreis unterbrochen wird. Die Bewegung der Schneidklingen wird somit abgebrochen, um eine Beschädigung aufgrund von Überlastung zu vermeiden.

Die Erfindung wird in den nachfolgenden Zeichnungen näher erläutert. Es zeigt
- Fig. 1: eine Gesamtdarstellung einer Ausführungsform der erfindungsgemäßen Baumschneidevorrichtung, bestehend aus Schneidkopf, Verlängerungselement und Bedienteil,
- Fig. 2: ein Bedienteil mit einem Schneidkopf,
- Fig. 3: ein Verlängerungselement,
- Fig. 4: eine erfindungsgemäße Arretierscheibe,
- Fig. 5: eine Arretierscheibe gemäß dem Stand der Technik,
- Fig. 6: eine Explosionsdarstellung der Montageteile für die beiden Schneidklingen,
- Fig. 7: eine Explosionsdarstellung der Antriebseinheit,
- Fig. 8: eine Explosionsdarstellung der Hall-Komponenten,
- Fig. 9: eine Explosionsdarstellung der Verbindungselemente.

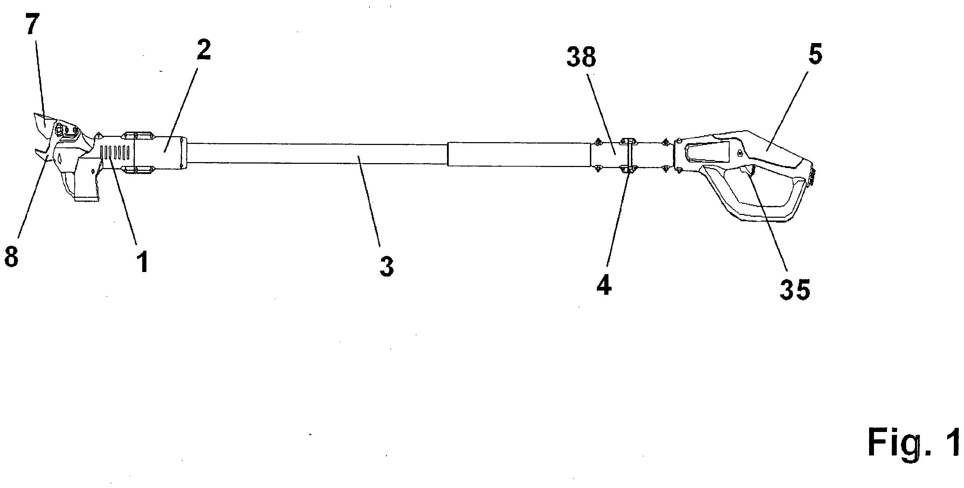

In Fig. 1 ist eine Ausführungsform der erfindungsgemäßen Baumschneidevorrichtung gezeigt. Der Schneidkopf 1 beinhaltet die Antriebseinheit und umfasst eine bewegbare Schneidklinge 7 und eine feststehende Schneidklinge 8. Über einen Adapter 2 wird ein Verlängerungselement 3 an den Schneidkopf 1 mit Verbindungsstücken 38 gekoppelt. Das andere Ende des Verlängerungselementes 3 ist mit dem Bedienteil 5 verbunden. Die elektrische Kontaktierung erfolgt über Steckverbindungen 4. Am Bedienteil 5 befindet sich ferner ein Taster 35 zur Bedienung der Schneidvorrichtung.

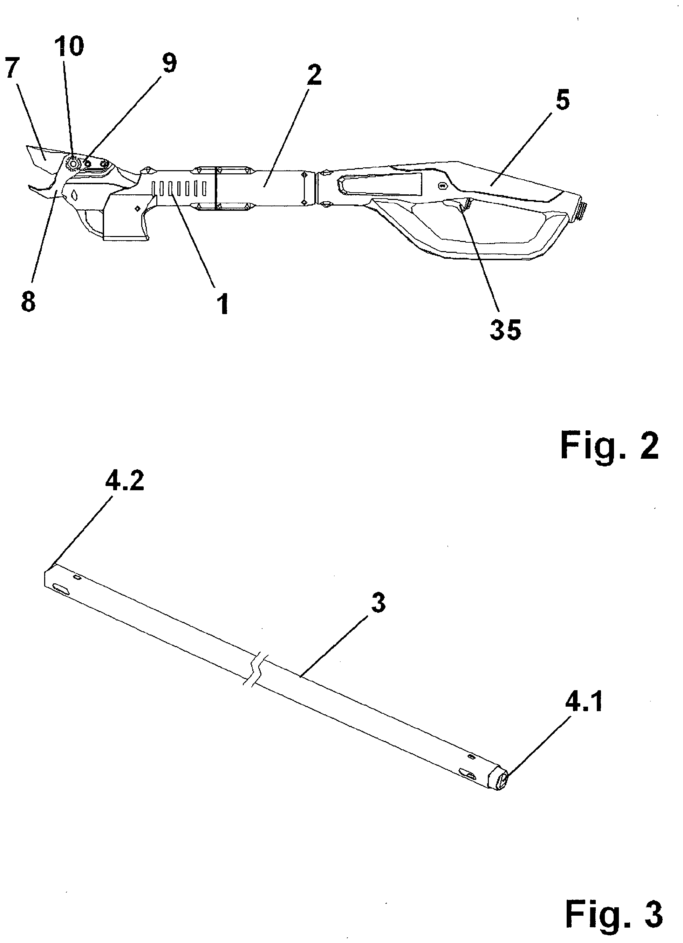

In Fig. 2 ist eine Ausführungsform der erfindungsgemäßen Baumschneidevorrichtung ohne Verlängerungselement gezeigt. Das Bedienteil 5 ist direkt mit dem Schneidkopf 1 verbunden. Der Öffnungswinkel der feststehenden Schneidklinge 8 relativ zur bewegbaren Schneidklinge 7 ist über einen Zahnkranz 10 und eine Arretierscheibe 9 einstellbar.

In Fig. 3 ist ein erfindungsgemäßes Verlängerungselement 3 gezeigt. In diesem verlaufen die Leitungen für die Steuerungseinheit und/oder die Antriebseinheit. An den Enden des Verlängerungselementes 3 sind jeweils elektrische Steckverbindungen 4.1, 4.2 ausgebildet. Mit diesen wird eine elektrische Kontaktierung mit dem Bedienteil 5 bzw. dem Schneidkopf 1 bewirkt.

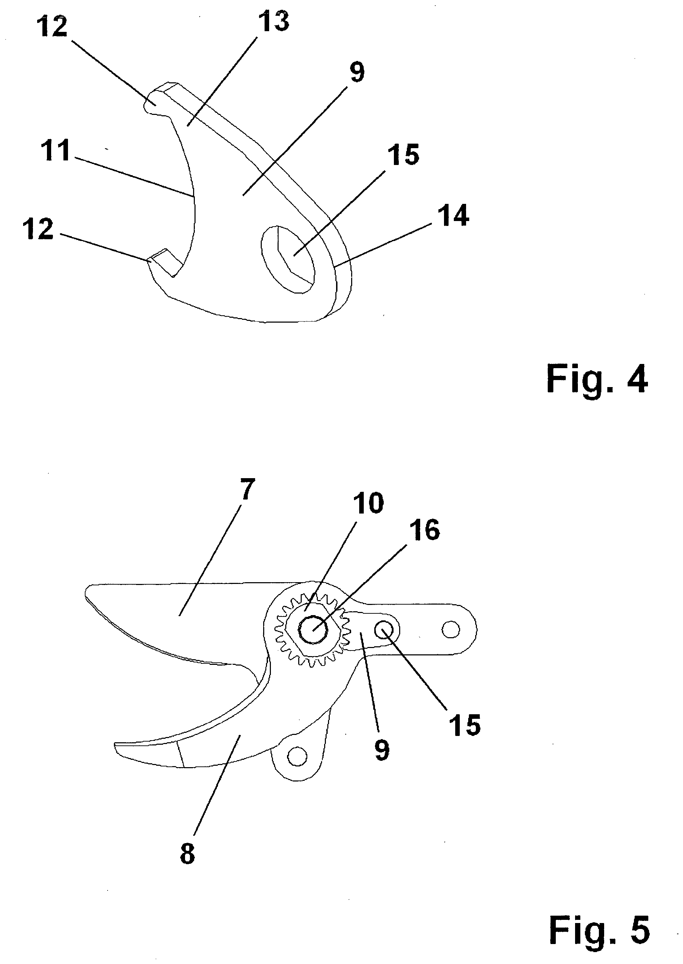

In Fig. 4 ist eine erfindungsgemäße Arretierscheibe 9 gezeigt. Als besonderes Merkmal umfasst sie einen U-förmigen Aufnahmebereich 11 im Kopplungsbereich 13 sowie zwei leicht nach innen geneigte Haken 12. Im Befestigungsbereich 14 befindet sich eine Befestigungsöffnung 15 für die Montage. Ein besonderer Vorteil ist darin zu sehen, dass die Arretierscheibe 9 zur Kopplung mit dem Zahnkranz 10 mit lediglich zwei Haken 12 auskommt.

In Fig. 5 ist ein Vergleichsbeispiel einer Arretierscheibe 9 aus dem Stand der Technik gezeigt. Diese umfasst mehrere Zacken zur Kooperation mit dem Zahnkranz 10.

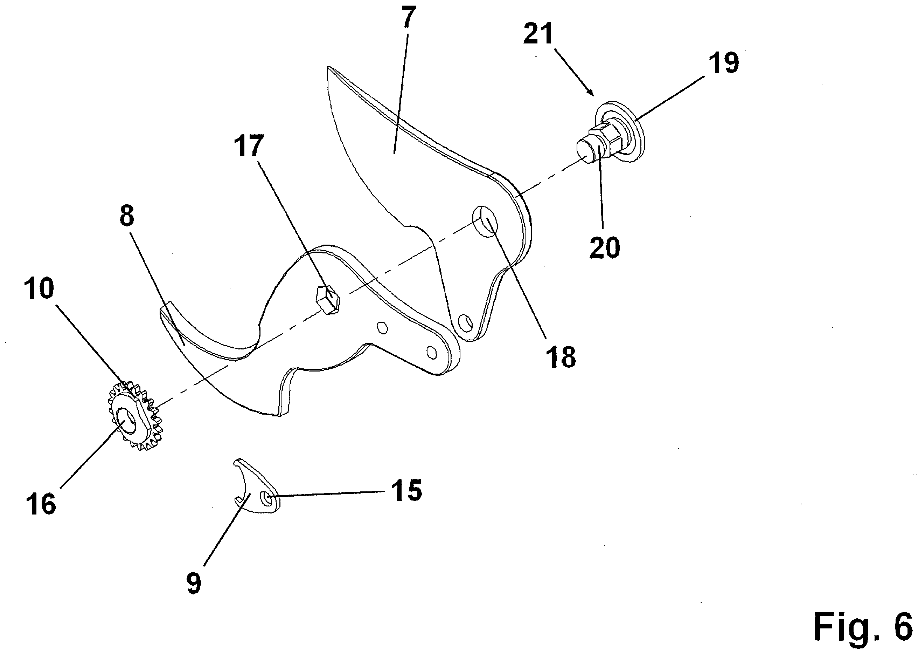

In Fig. 6 ist eine Explosionsdarstellung der beiden Schneidklingen 7, 8 gezeigt. Das Montageteil 21 umfasst einen Stift 20 und ein tellerförmiges Abschlussstück 19. Das Kopfende des Stiftes 20 ist zylinderförmig ausgebildet und kooperiert mit der Befestigungsöffnung 16 des Zahnkranzes 10. Die bewegbare Schneidklinge 7 umfasst eine runde Montageöffnung 18, während die feststehende Schneidklinge 8 eine mehreckige Arretieröffnung 17 umfasst. Die mehreckige Arretieröffnung 17 kooperiert mit dem geometrischen Gegenprofil, das im Zentrum des Stiftes 20 des Montageteils 21 ausgebildet ist.

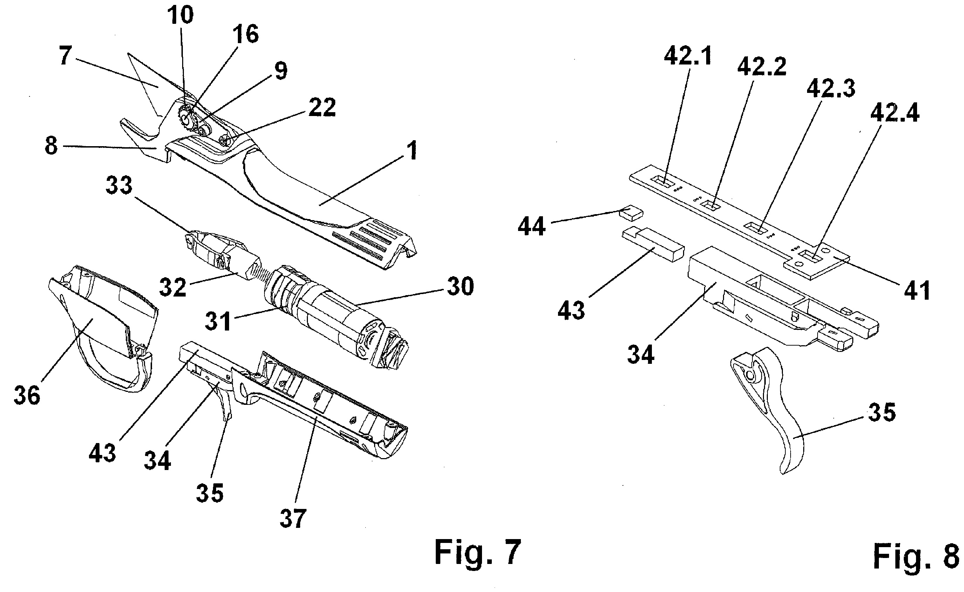

In Fig. 7 ist die erfindungsgemäße Antriebseinheit 30 gezeigt, bestehend aus einem Antriebskopf 32 sowie einem Adapter 33, der mit der bewegbaren Schneidklinge 7 und der feststehenden Schneidklinge 8 kooperiert. Die Befestigung der feststehenden Schneidklinge 8 erfolgt über Befestigungsmittel 22.

Der Taster 35 kooperiert innerhalb einer Tasterüberträgers 34 mit dem Magnetträger 43. Die Konstruktion wird in einem Gehäuse 36 untergebracht.

In Fig. 8 sind die erfindungsgemäßen Hall-Komponenten gezeigt. Die Hall-Platte 41 umfasst mehrere Arbeitspositionen 42, die in der gezeigten Ausführungsform als Arbeitspositionen 42.1, 42.2, 42.3 und 42.4 gekennzeichnet sind. Die Arbeitsposition 42.1 stellt den Ein-/Aus-Zustand dar. Die Arbeitsposition 42.2 korreliert mit einem großen Öffnungswinkel der beiden Schneidklingen 7, 8, während die Arbeitsposition 42.3 mit einem kleinen Öffnungswinkel korreliert. Die Arbeitsposition 42.4 korreliert mit einer geschlossenen Position, d.h. einem Öffnungswinkel gleich Null.

Der Magnet 44 wird von einem Magnetträger 43 gehalten. Der Magnetträger 43 ist innerhalb des Tasterüberträgers 34 über den Taster 35 zu den einzelnen Arbeitspositionen 42.1, 42.2, 42.3 und 42.4 verschiebbar. Die einzelnen Arbeitspositionen 42.1 bis 42.4 sind über einen oder mehrere Hall-Sensoren erfassbar. Die Hall-Platte 41 detektiert unterschiedliche Hall-Signale, die mit den einzelnen Arbeitspositionen 42.1 bis 42.4 korrelieren. Der Taster 35 bewegt den Magneten 44 in die jeweiligen Positionen. Die von dem Hall-Sensor aufgenommenen Signale werden der Steuerungseinheit übermittelt. Die Steuerungseinheit passt den Rotationswinkel der Antriebseinheit an und steuert ferner den Schneidkopf.

Das erfindungsgemäße Steuerungssystem ermöglicht einen variablen Öffnungswinkelbereich zwischen den beiden Schneidklingen. Bei Betätigung des Schalters 35 öffnen sich zunächst die beiden Schneidklingen 7, 8 vollständig (großer Öffnungswinkel). Danach können unterschiedliche Öffnungswinkel eingestellt werden, entsprechend den Arbeitspositionen 42.1 bis 42.4. Ein Ende des Magnethalters 43 ist mit einer Rückziehfeder verbunden, das andere Ende mit dem Taster 35. Solange sich also der Magnet 44 an der Arbeitsposition 42.1 befindet, sind die Schneidklingen 7, 8 vollständig geöffnet und die feststehende Schneidklinge 8 liegt in der offenen Position vor. Wenn der Taster 35 zweimal betätigt wird, wird der Magnet 44 zu der Arbeitsposition 42.2 bewegt, was einem großen Öffnungswinkel entspricht. Je kleiner der Öffnungswinkel der beiden Schneidklingen 7, 8 ist, umso größer ist die Schneidgeschwindigkeit, was letztendlich zu einer Energieeinsparung führt. Kleinere Schneidobjekte können daher mit kleineren Schneidwinkeln geschnitten werden, während größere Schneidobjekte wie Äste mit einem größeren Öffnungswinkel der feststehenden Schneidklinge 8 geschnitten werden.

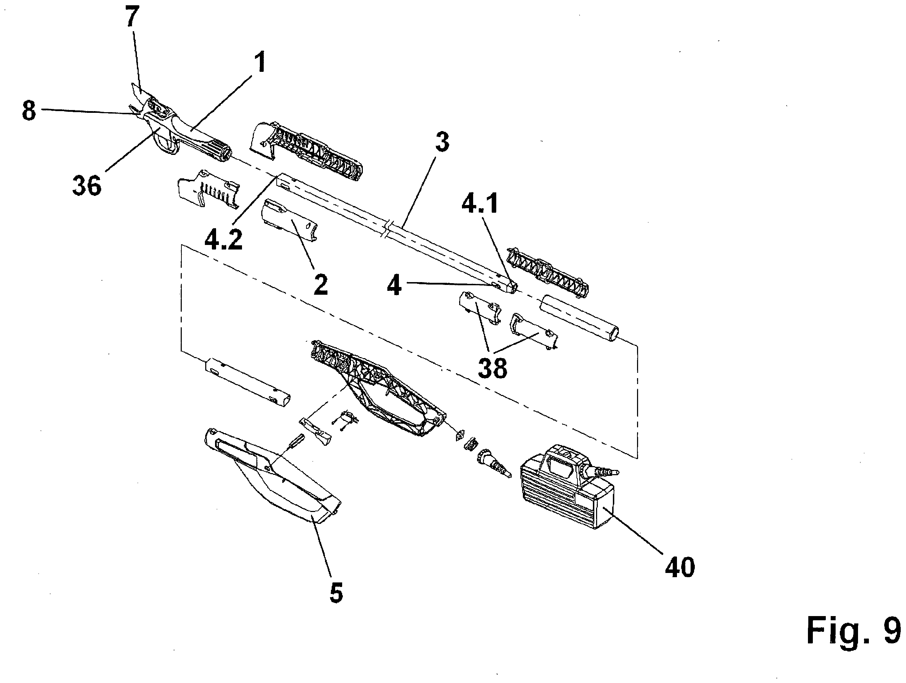

In Fig. 9 ist eine Explosionsdarstellung gezeigt. Hervorzuheben ist die Energieversorgungseinheit 40, dargestellt als Batterie. In diesem Gehäuse befindet sich auch die Steuerungseinheit für die Hall-Komponenten bzw. die Antriebseinheit. Insofern ist die Energieversorgungseinheit 40 mit der Steuerungseinheit von dem eigentlichen Bedienteil 5 bzw. dem Schneidkopf 1 getrennt.

## Patentansprüche

1. Baumschneidevorrichtung, bestehend aus
- einem Schneidkopf (1) mit einer bewegbaren Schneidklinge (7), einer feststehenden Schneidklinge (8) und einer Antriebseinheit (30) für die bewegbare Schneidklinge (7), wobei die beiden Schneidklingen (7, 8) über ein Montageteil (21) miteinander verbunden sind und wobei der Öffnungswinkel der feststehenden Schneidklinge (8) über einen Zahnkranz (10) und eine Arretierscheibe (9) feststellbar ist,
- einem Bedienteil (5) mit einem Handgriff und einem Taster (35) zur Steuerung der Antriebseinheit (30),
**dadurch gekennzeichnet, dass** die feststehende Schneidklinge (8) durch die Antriebseinheit (30) in wenigstens eine Arbeitsposition (42) verstellbar ist, bei der sich der Öffnungswinkel der feststehenden Schneidklinge (8) relativ zur bewegbaren Schneidklinge (7) entweder vergrößert oder verkleinert, wobei die wenigstens eine Arbeitsposition (42) von einer Hall-Platte (41) zur Detektion von Magnetfeldkomponenten vorgegeben ist, wobei ein auf einem Magnetträger (43) angeordneter Magnet (44) vermittelt durch den Taster (35) und die Hall-Platte (41) relativ zueinander verschiebbar sind, wobei die Magnetfeldkomponenten der wenigstens einen Arbeitsposition (42) von einem Hall-Sensor erfassbar und an eine Steuerungseinheit zur Steuerung der Antriebseinheit (30) der feststehenden Schneidklinge (8) übermittelbar sind.

2. Baumschneidevorrichtung nach Anspruch 1, **dadurch gekennzeichnet, dass** die Hall-Platte (41) mehrere Arbeitspositionen (42.1, 42.2, 42.3, 42.4) umfasst, wobei der Magnetträger (43) mit dem Magneten (44) entlang der Hall-Platte (41) zu den einzelnen Arbeitspositionen (42.1, 42.2, 42.3, 42.4) bewegbar ist.

3. Baumschneidevorrichtung nach Anspruch 1 oder 2, **dadurch gekennzeichnet, dass** die Antriebseinheit (30) eine elektrische Antriebseinheit, bestehend aus einem Antriebskopf (32) und einem Adapter (33) ist, die den Öffnungswinkel der feststehenden Schneidklinge (8) entsprechend den Steuerungsausgaben der Steuerungseinheit einstellt.

4. Baumschneidevorrichtung nach einem der Ansprüche 1 bis 3, **dadurch gekennzeichnet, dass** zwischen dem Bedienteil (5) und dem Schneidkopf (1) ein längenveränderbares Verlängerungselement (3) angeordnet ist, wobei die Leitungen der Steuerungseinheit und/oder der Antriebseinheit (30) innerhalb des Verlängerungselements (3) verlaufen.

5. Baumschneidevorrichtung nach Anspruch 4, **dadurch gekennzeichnet, dass** die elektrische Verbindung des Schneidkopfes (1) und des Bedienteils (5) über eine am Kopfende des Verlängerungselements (3) ausgebildete elektrische Steckverbindung (4.1, 4. 2) erfolgt.

6. Baumschneidevorrichtung nach einem der Ansprüche 1 bis 5, **dadurch gekennzeichnet, dass** die Arretierscheibe (9) für die feststehende Schneidklinge (8) zwei Haken (12) und einen zwischen den Haken (12) ausgebildeten rundförmigen Aufnahmebereich (11) für den Zahnkranz (10) umfasst.

7. Baumschneidevorrichtung nach einem der Ansprüche 1 bis 6, **dadurch gekennzeichnet, dass** die feststehende Schneidklinge (8) eine mehreckige Arretieröffnung (17) und die bewegbare Schneidklinge (7) eine davon geometrisch unterscheidbare runde Montageöffnung (18) umfasst, wobei das Montageteil (21) den Zahnkranz (10), die feststehende Schneidklinge (8) und die bewegbare Schneidklinge (7) über die mehreckige Arretieröffnung (17) und die runde Montageöffnung (18) zusammenhält.

8. Baumschneidevorrichtung nach einem der Ansprüche 1 bis 7, **dadurch gekennzeichnet, dass** das eine Ende des Tasters (35) mit dem Magnetträger (43) kooperiert, wobei die Position des Magnetträgers (43) entsprechend der Betätigung des Tasters (35) veränderbar ist, wobei sowohl die bewegbare Schneidklinge (7) als auch die Arbeitsposition(en) (42) der feststehenden Schneidklinge (8) über den Taster (35) steuerbar sind.

9. Baumschneidevorrichtung nach einem der Ansprüche 1 bis 8, **dadurch gekennzeichnet, dass** der Öffnungswinkel zwischen der bewegbaren Schneidklinge (7) und der feststehenden Schneidklinge (8) zwischen 20 und 30 mm beträgt.

10. Baumschneidevorrichtung nach einem der Ansprüche 1 bis 9, **dadurch gekennzeichnet, dass** der Antrieb der bewegbaren Schneidklinge (7) über die Antriebseinheit (30) durch eine Kugelgewindestange vermittelt ist.

11. Baumschneidevorrichtung nach einem der Ansprüche 1 bis 10, **dadurch gekennzeichnet, dass** die Steuerungseinheit für die Antriebseinheit (30) in einer Energieversorgungseinheit (40) vereint ist.

12. Baumschneidevorrichtung nach einem der Ansprüche 1 bis 11, **dadurch gekennzeichnet, dass** eine Schutzreinrichtung vorgesehen ist, welche die Antriebseinheit (30) bei Überlastung der bewegbaren Schneidklinge (7) ausschaltet.

13. Baumschneidevorrichtung nach einem der Ansprüche 1 bis 12, **dadurch gekennzeichnet, dass** der Magnetträger (43) mit einer Rückziehfeder verbunden ist.

14. Baumschneidevorrichtung nach einem der Ansprüche 1 bis 13, **dadurch gekennzeichnet, dass** die Steuerungseinheit ein Signalverarbeitungsmodul und ein Antriebssteuerungsmodul umfasst.

15. Baumschneidevorrichtung nach einem der Ansprüche 1 bis 14, **dadurch gekennzeichnet, dass** der Magnetträger (43) innerhalb eines Tasterüberträgers (34) für den Taster (35) führbar ist.

## Claims

1. Tree-cutting apparatus, consisting of
- a cutting head (1) comprising a movable cutting blade (7), a stationary cutting blade (8) and a drive unit (30) for the movable cutting blade (7), the two cutting blades (7, 8) being interconnected by means of an assembly part (21) and it being possible to lock in the opening angle of the stationary cutting blade (8) by means of a toothed rim (10) and a locking disc (9),
- an operating part (5) comprising a handle and a push-button (35) for controlling the drive unit (30),
**characterised in that** the stationary cutting blade (8) can be shifted by the drive unit (30) into at least one working position (42) in which the opening angle of the stationary cutting blade (8) relative to the movable cutting blade (7) either increases or decreases, the at least one working position (42) being provided by a Hall plate (41) for detecting magnetic field components, it being possible to move a magnet (44), arranged on a magnet carrier (43) and actuated by means of the push-button (35), and the Hall plate (41) relative to one another, and it being possible to detect the magnetic field components of the at least one working position (42) by a Hall sensor and to transmit said components to a control unit for controlling the drive unit (30) of the stationary cutting blade (8).

2. Tree-cutting apparatus according to claim 1, **characterised in that** the Hall plate (41) includes a plurality of working positions (42.1, 42.2, 42.3, 42.4), it being possible to move the magnet carrier (43) together with the magnet (44) along the Hall plate (41) into the individual working positions (42.1, 42.2, 42.3, 42.4).

3. Tree-cutting apparatus according to either claim 1 or claim 2, **characterised in that** the drive unit (30) is an electric drive unit consisting of a drive head (32) and an adapter (33), which unit adjusts the opening angle of the stationary cutting blade (8) according to the control output from the control unit.

4. Tree-cutting apparatus according to any of claims 1 to 3, **characterised in that** a longitudinally adjustable extension element (3) is arranged between the operating part (5) and the cutting head (1), the lines for the control unit and/or the drive unit (30) extending inside the extension element (3).

5. Tree-cutting apparatus according to claim 4, **characterised in that** the electrical connection of the cutting head (1) and the operating part (5) is achieved by an electrical plug connection (4.1, 4.2) formed at the head end of the extension element (3).

6. Tree-cutting apparatus according to any of claims 1 to 5, **characterised in that** the locking disc (9) for the stationary cutting blade (8) comprises two hooks (12) and a rounded region (11) for receiving the toothed rim (10), which region is formed between the hooks (12).

7. Tree-cutting apparatus according to any of claims 1 to 6, **characterised in that** the stationary cutting blade (8) comprises a polygonal locking opening (17) and the movable cutting blade (7) comprises a round assembly opening (18) that is geometrically distinguishable therefrom, the assembly part (21) holding together the toothed rim (10), the stationary cutting blade (8) and the movable cutting blade (7) by means of the polygonal locking opening (17) and the round assembly opening (18).

8. Tree-cutting apparatus according to any of claims 1 to 7, **characterised in that** one end of the push-button (35) cooperates with the magnet carrier (43), it being possible to change the position of the magnet carrier (43) corresponding to the actuation of the push-button (35), it being possible to control both the movable cutting blade (7) and the working position(s) (42) of the stationary blade (8) by means of the push-button (35).

9. Tree-cutting apparatus according to any of claims 1 to 8, **characterised in that** the opening angle between the movable cutting blade (7) and the stationary cutting blade (8) is between 20 and 30 mm.

10. Tree-cutting apparatus according to any of claims 1 to 9, **characterised in that** the drive action of the movable cutting blade (7) is provided via the drive unit (30) by means of a ballscrew rod.

11. Tree-cutting apparatus according to any of claims 1 to 10, **characterised in that** the control unit for the drive unit (30) is combined in a power supply unit (40).

12. Tree-cutting apparatus according to any of claims 1 to 11, **characterised in that** a protective device is provided that switches off the drive unit (30) when the movable cutting blade (7) is overloaded.

13. Tree-cutting apparatus according to any of claims 1 to 12, **characterised in that** the magnet carrier (43) is connected to a release spring.

14. Tree-cutting apparatus according to any of claims 1 to 13, **characterised in that** the control unit comprises a signal processing module and a drive control module.

15. Tree-cutting apparatus according to any of claims 1 to 14, **characterised in that** the magnet carrier (43) can be guided inside a push-button transformer (34) for the push-button (35).

## Revendications

1. Dispositif électrique de coupe d'arbre, composé
- d'une tête de coupe (1) avec une lame de coupe mobile (7), une lame de coupe fixe (8) et une unité d'entraînement (30) pour la lame de coupe mobile (7), où les deux lames de coupe (7, 8) sont reliées par un adaptateur de montage (21) et où l'angle d'ouverture de la lame de coupe fixe (8) est réglable par une roue dentée (10) et une rondelle de blocage (9),
- un dispositif de commande (5) avec une poignée et une gâchette (35) pour la commande de l'unité d'entraînement (30),
**caractérisé par le fait que** la lame de coupe fixe (8) peut être réglée par l'unité d'entraînement (30) dans au moins une position de travail (42), l'angle d'ouverture de la lame de coupe fixe (8) par rapport à la lame de coupe mobile (7) étant soit augmenté ou diminué, dispositif dans lequel ladite au moins une position de travail (42) est prédéterminée par une plaque de Hall (41) pour la détection de composantes de champ magnétique, un aimant (44) disposé sur un support d'aimant (43) transmis par la gâchette (35) et la plaque de Hall (41) pouvant être déplacés l'un par rapport à l'autre, les composantes de champ magnétique de ladite au moins une position de travail (42) pouvant être relevées par un capteur à effet Hall et transmises à une unité de commande pour la commande l'unité d'entraînement (30) de la lame de coupe fixe (8).

2. Dispositif de coupe d'arbre selon la revendication 1, **caractérisé en ce que** la plaque de Hall (41) englobe plusieurs positions de travail (42.1, 42.2, 42.3, 42.4), le support d'aimant (43) avec l'aimant (44) étant mobile le long de la plaque de Hall (41) aux positions de travail individuelles (42.1, 42.2, 42.3, 42.4).

3. Dispositif de coupe d'arbre selon la revendication 1 ou 2, **caractérisé, en ce que** l'unité d'entraînement (30) est une unité d'entraînement électrique comprenant une tête d'entraînement (32) et un adaptateur (33), qui ajuste l'angle d'ouverture de la lame de coupe fixe (8) selon les sorties de commande de l'unité de commande.

4. Dispositif de coupe d'arbre selon l'une des revendications 1 à 3, **caractérisé en ce qu'**entre le pupitre de commande (5) et la tête de coupe (1) est disposé un élément d'extension télescopique (3), les tuyaux de l'unité de commande et/ou l'unité d'entraînement (30) se trouvant dans l'élément d'extension (3).

5. Dispositif de coupe d'arbre selon la revendication 4, **caractérisée en ce que** le raccordement électrique de la tête de coupe (1) et du pupitre de commande (5) s'effectue via un connecteur électrique (4.1, 4.2) formé sur l'extrémité frontale de l'élément d'extension (3).

6. Dispositif de coupe d'arbre selon les revendications 1 à 5, **caractérisé en ce que** la rondelle de blocage (9) pour la lame de coupe fixe (8) comprend deux crochets (12) et une zone de réception arrondie (11) pour la roue dentée (10) formée entre les deux crochets (12).

7. Dispositif de coupe d'arbre selon les revendications 1 à 6, **caractérisé en ce que** la lame de coupe fixe (8) comprend une ouverture de verrouillage polygonale (17) et la lame mobile (7) une ouverture de montage ronde (18) géométriquement distinguable, la pièce de montage (21) assemblant la roue dentée (10), la lame de coupe fixe (8) et la lame de coupe mobile (7) grâce à l'ouverture de verrouillage polygonale (17) et l'ouverture de montage ronde (18).

8. Dispositif de coupe d'arbre selon l'une des revendications 1 à 7, **caractérisé en ce qu'**une extrémité de la gâchette (35) coopère avec le support d'aimant (43), la position du support d'aimant (43) étant modifiable selon l'opération de la gâchette (35), la lame de coupe mobile (7) ainsi que la/les position(s) de travail (42) de la lame de coupe fixe (8) pouvant être commandées par la gâchette (35).

9. Dispositif de coupe d'arbre selon les revendications 1 à 8, **caractérisé en ce que** l'angle d'ouverture entre la lame de coupe mobile (7) et la lame de coupe fixe (8) mesure entre 20 et 30 mm.

10. Dispositif de coupe d'arbre selon les revendications 1 à 9, **caractérisé en ce que** l'entraînement de la lame mobile est communiqué par l'unité d'entraînement (30) est véhiculée par un tube avec filetage à roulement à billes.

11. Dispositif de coupe d'arbre selon les revendications 1 à 10, **caractérisé en ce que** l'unité de commande pour l'unité d'entraînement (30) est assemblée dans une unité d'alimentation en énergie (40).

12. Dispositif de coupe d'arbre selon les revendications 1 à 11, **caractérisé en ce qu'**un dispositif de protection est prévu pour l'arrêt de l'unité d'entraînement (30) en cas de surcharge de la lame de coupe mobile (7).

13. Dispositif de coupe d'arbre selon les revendications 1 à 12, **caractérisé en ce que** le support d'aimant (43) est relié à un ressort de retrait.

14. Dispositif de coupe d'arbre selon les revendications 1 à 13, **caractérisé en ce que** l'unité de commande comporte un module de traitement du signal et un module de commande d'entraînement.

15. Dispositif de coupe d'arbre selon les revendications 1 à 14, **caractérisé en ce que** le support d'aimant (43) peut être guidé au sein d'un vecteur de gâchette (34) pour la gâchette (35).
